# EUROPÄISCHE PATENTSCHRIFT

(11) **EP 1 178 012 B1**
(45) Veröffentlichungstag und Bekanntmachung des Hinweises auf die Patenterteilung: **10.05.2006**
(21) Anmeldenummer: 01116811.9
(22) Anmeldetag: 10.07.2001
(51) Int. Cl.: C01G 49/02, C09C 1/24

(54) **Eisenoxide mit höherem Veredelungsgrad**
Highly refined iron oxides
Oxides de fer hautement affinés

(30) Priorität: 31.07.2000 DE 10037636; 20.09.2000 DE 10046876
(43) Veröffentlichungstag der Anmeldung: 06.02.2002
(73) Patentinhaber: BASF Aktiengesellschaft, 67056 Ludwigshafen (DE)
(72) Erfinder: Walsdorff, Christian, Dr., 67061 Ludwigshafen (DE); Petersen, Hermann, Dr., 67269 Grünstadt (DE); Harth, Klaus, Dr., 67317 Altleiningen (DE); Baier, Michael, Dr., 68161 Mannheim (DE)

(56) Entgegenhaltungen:
- EP-A- 1 027 928
- WO-A-95/25069
- WO-A-96/32355

## Beschreibung

Die vorliegende Erfindung betrifft ein Verfahren zur Veredelung von Eisenoxid wobei das Eisenoxid mit Salpetersäure gemischt und anschließend einer thermischen Behandlung bei erhöhten Temperaturen unterzogen wird.

Eisenoxide werden technisch auf verschiedene Arten hergestellt oder fallen bei einigen technischen Prozessen an. Ein Verfahren besteht in der Aufarbeitung von salzsauren Beizlösungen der Stahlindustrie. Dabei wird die salzsaure Eisenchloridlösung mit Sauerstoff in einem Sprühröster unter Bildung von hauptsächlich Fe₂O₃ (Hämatit) und Chlorwasserstoff umgesetzt. Ein weiteres Verfahren ist dasjenige nach Penniman, bei dem Eisenschrott in einer schwefelsauren Suspension von FeOOH-Kristalliten unter Zusatz von Sauerstoff in FeOOH umgewandelt wird. Das dabei erhaltene FeOOH wird durch Calcination in Fe₂O₃ umgewandelt werden.

Aus der WO-A-96/32355 ist ein Verfahren zur Minderung des Chloridgehaltes in Eisenoxiden, insbesondere in durch Sprühröstung salzsaurer Beizlösungen hergestellten Eisenoxide, durch Mischen des chloridhaltigen Eisenoxids mit einer hydratisierten Metallverbindung und Wasser und anschließendes Kalzinieren bekannt. Die Verwendung einer hydratisierten Metallverbindung macht das Verfahren teuer und aufwendig.

Dokument WO9525069 offenbart ein Verfahren zur Veredelung von Eisenoxiden, die zunächst mit verdünnter Schwefelsäure umgesetzt, dann bei Temperaturen um 170°C getrocknet und anschließend bei 825°C kalziniert werden. Die eingesetzten Eisenoxide stammen aus der Sprühröstung von salzsauren Beizlösungen der Stahlindustrie. Die so behandelten Eisenoxide enthalten einen Restchloridgehalt von weniger als 800 ppm.

Aus der EP-A-406 633 ist ein Verfahren zur Herstellung grobteiligen Eisenoxids nach dem Penniman-Verfahren beschrieben, bei dem Eisenschrott in FeOOH umgewandelt und durch Kristallisation mit einer geringen Konzentration an FeOOH-Kristallkeimen grobteiliges FeOOH erhalten wird, das anschließend zu grobteiligem Eisenoxid calciniert wird. Dieses Verfahren ist aufwendig und teuer.

Der vorliegenden Erfindung lag daher die Aufgabe zugrunde, diesen Nachteilen abzuhelfen.

Demgemäß wurde ein neues und verbessertes Verfahren zur Veredelung von Eisenoxid gefunden, welches dadurch gekennzeichnet ist, daß man Eisenoxide mit Salpetersäure mischt und anschließend eine thermische Behandlung bei Temperaturen von 50 bis 1300°C durchführt.

Das erfindungsgemäße Verfahren kann wie folgt durchgeführt werden:

Man kann das Eisenoxid mit Salpetersäure mischen und anschließend einer thermischen Behandlung bei Temperaturen von 50 bis 1300°C aussetzen.

Als Eisenoxide eignen sich alle Eisenoxide, unabhängig von deren Herstellung. Natürliche, bevorzugt technisch hergestellte Eisenoxide können als Verunreinigung beispielsweise einen Restchlorgehalt und/oder Verbindungen von Titan, Mangan, Aluminium, Chrom, Phosphor, Zink, Kupfer, Molybdän, Silicium, Nickel, Magnesium, Kalium, Natrium, Cobalt, Vanadin, Niob, Schwefel und/oder Calcium enthalten. Insbesondere eignen sich Eisenoxide, die durch Sprühröstung von salzsauren Beizlösungen in der Stahlindustrie hergestellt werden und als Fe₂O₃ (Hämatit) mit einem Restchloridgehalt zwischen 0 und 20000 ppm, bevorzugt zwischen 0,1 und 5000 ppm und besonders bevorzugt zwischen 1 und 2000 ppm vorliegen.

Ganz besonders bevorzugt wird verdünnte 0,5 bis 50 Gew.-%ige, bevorzugt 0,5 bis 25 Gew.-%ige, besonders bevorzugt 0,5 bis 15 Gew.-%ige Salpetersäure eingesetzt.

Das Eisenoxid kann mit Salpetersäure zu einer flüssigen Suspension, bevorzugt zu einer feuchten, besonders bevorzugt wäßrigfeuchten Masse, insbesondere "erdfeuchten" Masse gemischt werden, wobei in der Regel alle üblichen Mischeinrichtungen, vorzugsweise Mischer, Kneter oder Mix-Muller Verwendung finden. Zur Herstellung der bevorzugten feuchten Massen aus Eisenoxid und Salpetersäure werden in der Regel pro Kilogramm Eisenoxid 10 bis 3000 ml, bevorzugt 50 bis 2000 ml, besonders bevorzugt 70 bis 1500 ml und insbesondere 100 bis 800 ml einer gegebenenfalls wäßrig-verdünnten Salpetersäure eingesetzt.

Das Mischen kann diskontinuierlich, satzweise, halb-kontinuierlich oder kontinuierlich durchgeführt werden.

Nach dem Mischen kann die Mischung einige Zeit stehen gelassen oder direkt thermisch behandelt werden. Zur thermischen Behandlung kann die Mischung diskontinuierlich, satzweise, halb-kontinuierlich oder kontinuierlich bei einer oder bei verschiedenen Temperaturen zwischen 50 und 1300°C behandelt werden. Die thermische Behandlung umfaßt in der Regel eine Trocknung bei Temperaturen von 50 bis 300°C, bevorzugt 80 bis 200°C, besonders bevorzugt 90 bis 180°C und eine Calcinierung bei Temperaturen zwischen 450 und 1300°C, bevorzugt zwischen 550 und 1200°C und besonders bevorzugt zwischen 600 und 1100°C. Eine besonders bevorzugte Ausführungsform besteht in einer Calcinierung bei 750 bis 1000°C, insbesondere bei 800 bis 950°C.

Das erfindungsgemäß behandelte Eisenoxid hat in der Regel einen Restchloridgehalt von ≤ 800 ppm, also 0 bis 800 ppm, bevorzugt ≤ 700 ppm, also 0,1 bis 700 ppm, besonders bevorzugt ≤ 250 ppm, also 0,2 bis 250 ppm, insbesondere ≤ 150 ppm, also 0,3 bis 150 ppm, und eine mittlere Partikelgröße von 10 bis 300 µm, bevorzugt 15 bis 250 µm, besonders bevorzugt 20 bis 150 µm, insbesondere 25 bis 100 µm, in der Regel ein Feinanteil mit Partikelgrößen < 1 µm von weniger als 20 Gew.-%, bevorzugt weniger als 10 Gew.-%, eine BET-Oberfläche zwischen 0,5 bis 10 m²/g, vorzugsweise zwischen 1 und 5 m²/g, besonders bevorzugt zwischen 1 und 3 m²/g und ganz besonders bevorzugt zwischen 1 und 2 m²/g, in der Regel eine Hämatitstruktur und kann für eine Reihe technische Anwendungen wie Pharmazeutika, Kosmetika, Magnetbandbeschichtungen, chemische Reaktionen, Katalysatoren, insbesondere für die Herstellung von Katalysatoren zur Dehydrierung von Ethylbenzol zu Styrol verwendet werden. Die mittlere Partikelgröße wurde mittels Laserbeugung bestimmt.

### Beispiele

In allen Beispielen wurde das Eisenoxid Type HP (Hösch Premium) der Firma Thyssen-Krupp als Einsatzstoff verwendet. Die Bestimmung des Restchloridgehalts erfolgte in allen Fällen coulometrisch. Die Partikelgröße des Eisenoxids wurde mit dem Gerät Mastersizer S der Fa. Malvern (Linse: 300 RFmm, Messbereich 0,05 bis 880 µm) durchgeführt. Dabei wurde das Modell MS17 eingesetzt. Dabei handelt es sich um einen Probevorlagenbehälter zur Dispergierung in wässrigem Medium mit eingebautem Flügelrührer, integriertem Ultraschallgeber und Umlaufpumpe. Vor der Messung wurde das integrierte Ultraschallbad (Einstellung 100 %) in Betrieb genommen und nach 5 min. Dispergierzeit die Messung bei laufendem Ultraschall vorgenommen. Das unbehandelte Eisenoxid Type HP zeigte einen Restchloridgehalt von 1400 ppm, eine mittlere partikelgröße von 11 µm, einen Feinanteil von 15 Gew.-% mit Partikelgrößen < 1 µm und eine BET-Oberfläche von 4,3 m²/g.

### Beispiel 1

200 g des Eisenoxids wurden mit 125 ml 1%iger HNO₃ durchgemischt. Anschließend wurde die Mischung eine Stunde bei Raumtemperatur stehen gelassen, 16 h bei 120°C getrocknet, 1 h bei 700°C calciniert. Anschließend wurde das Eisenoxid durch ein Sieb mit der Maschenweite von 0,5 mm gedrückt.

### Beispiel 2

Das Eisenoxid wurde entsprechend Beispiel 1 behandelt mit dem Unterschied, daß 125 ml 5%iger HNO₃ verwendet wurden.

### Beispiel 3

Das Eisenoxid wurde entsprechend Beispiel 1 behandelt mit dem Unterschied, daß 125 ml 10%iger HNO₃ verwendet wurden.

### Beispiel 4

Das Eisenoxid wurde entsprechend Beispiel 1 behandelt mit dem Unterschied, daß die Mischung eine Stunde bei 900°C caliciniert wurde.

### Beispiel 5

Das Eisenoxid wurde entsprechend Beispiel 4 behandelt mit dem Unterschied, daß 125 ml 5%iger HNO₃ verwendet wurden.

### Beispiel 6

Das Eisenoxid wurde entsprechend Beispiel 4 behandelt mit dem Unterschied, daß 125 ml 10%iger HNO₃ verwendet wurden.

### Beispiel 7

5,6 kg des Eisenoxids wurden 20 min in einem Mixmuller mit 670 ml 10%iger HNO₃ gekollert. Die dabei erhaltene krümelfähige feuchte Masse wurde 2 h bei 120°C getrocknet, durch ein Sieb mit 0,8 mm Maschenweite gedrückt und anschließend in einem Umluftmuffelofen aufgeheizt und 60 min bei 900°C calciniert.

Die Ergebnisse des unbehandelten Eisenoxids und der erfindungsgemäß behandelten Eisenoxide aus den Beispielen 1 bis 7 sind in Tabelle 1 zusammengefaßt.

**Tabelle 1: Eigenschaften von unbehandeltem Eisenoxid und erfindungsgemäß behandelten Eisenoxiden.**

| Eisenoxid | Restchlorid [ppm] | mittlere Partikelgröße [µm] | Feinanteil kleiner 1µm [Gew.-%] | BET-Oberfläche [m²/g] |
|---|---|---|---|---|
| Unbehandelt Type HP (Thyssen-Krupp) | 1400 | 11 | 15 | 4,3 |
| Beispiel 1 | 680 | 9 | 16 | 3,6 |
| Beispiel 2 | 610 | 11 | 13 | 3,7 |
| Beispiel 3 | 570 | 10 | 14 | 3,4 |
| Beispiel 4 | 86 | 23 | 7 | 1,5 |
| Beispiel 5 | 60 | 31 | 6 | 1,6 |
| Beispiel 6 | 64 | 66 | 6 | 1,6 |
| Beispiel 7 | 100 | 26 | 3 | 1,4 |

## Patentansprüche

1. Verfahren zur Veredelung von Eisenoxid, **dadurch gekennzeichnet, daß** man Eisenoxide mit Salpetersäure mischt und anschließend eine thermische Behandlung bei Temperaturen von 50 bis 1300°C durchführt.

2. Verfahren zur Veredelung von Eisenoxid nach Anspruch 1, **dadurch gekennzeichnet, daß** man bei der thermischen Behandlung eine Trocknung bei Temperaturen von 50 bis 300°C und eine Calcinierung bei Temperaturen von 450 bis 1300°C durchführt.

3. Verfahren zur Veredelung von Eisenoxid nach einem der Ansprüche 1 oder 2, **dadurch gekennzeichnet, daß** man bei der thermischen Behandlung eine Calcinierung bei Temperaturen von 750 bis 1000°C durchführt.

4. Verfahren zur Veredelung von Eisenoxid nach einem der Ansprüche 1, 2 oder 3, **dadurch gekennzeichnet, daß** man verdünnte, wäßrige 0,1 bis 50 Gew.-%ige Salpetersäure einsetzt.

5. Verfahren zur Veredelung von Eisenoxid nach einem der Ansprüche 1, 2 oder 3, **dadurch gekennzeichnet, daß** man verdünnte, wäßrige 0,5 bis 15 Gew.-%ige Salpetersäure einsetzt.

6. Verfahren zur Veredelung von Eisenoxid nach einem der Ansprüche 1, 2, 3, 4 oder 5, **dadurch gekennzeichnet, daß** man Eisenoxide aus der Sprühröstung von salzsauren Beizlösungen der Stahlindustrie einsetzt.

## Claims

1. A process for upgrading an iron oxide, which comprises mixing said iron oxide with nitric acid and subsequently conducting a thermal treatment at from 50 to 1300°C.

2. The process according to claim 1 wherein said thermal treatment comprises a drying step at from 50 to 300°C and a calcining step at from 450 to 1300°C.

3. The process according to either of claims 1 and 2 wherein said thermal treatment comprises a calcining step at from 750 to 1000°C.

4. The process according to any of claims 1, 2 and 3 wherein the nitric acid used is dilute, aqueous and from 0.1% to 50% by weight in strength.

5. The process according to any of claims 1, 2 and 3 the nitric acid used is dilute, aqueous and from 0.5% to 15% by weight in strength.

6. The process according to any of claims 1, 2, 3, 4 and 5 wherein said iron oxide is generated by spray roasting hydrochloric acid pickling wastes from the steel industry.

## Revendications

1. Procédé d'ennoblissement d'oxyde de fer, **caractérisé en ce que** l'on mélange des oxydes de fer à de l'acide nitrique et l'on effectue ensuite un traitement thermique à des températures de 50 à 1300°C.

2. Procédé d'ennoblissement d'oxyde de fer selon la revendication 1, **caractérisé en ce que**, lors du traitement thermique, on effectue un séchage à des températures de 50 à 300°C et une calcination à des températures de 450 à 1300°C.

3. Procédé d'ennoblissement d'oxyde de fer selon l'une quelconque des revendications 1 ou 2, **caractérisé en ce que**, lors du traitement thermique, on effectue une calcination à des températures de 750 à 1000°C.

4. Procédé d'ennoblissement d'oxyde de fer selon l'une quelconque des revendications 1, 2 ou 3, **caractérisé en ce que** l'on utilise de l'acide nitrique aqueux dilué à 0,1 à 50% en poids.

5. Procédé d'ennoblissement d'oxyde de fer selon l'une quelconque des revendications 1, 2 ou 3, **caractérisé en ce que** l'on utilise de l'acide nitrique aqueux dilué à 0,5 à 15% en poids.

6. Procédé d'ennoblissement d'oxyde de fer selon l'une quelconque des revendications 1, 2, 3, 4 ou 5, **caractérisé en ce que** l'on utilise des oxydes de fer provenant du grillage par pulvérisation de solutions de décapage à l'acide chlorhydrique de l'industrie de l'acier.
